# EUROPEAN PATENT APPLICATION

(11) **EP 3 196 814 A1**
(43) Date of publication of application: **26.07.2017**
(21) Application number: 17152771.6
(22) Date of filing: 24.01.2017
(51) Int. Cl.: G06Q 10/06, G06Q 50/30, G05D 1/00

(54) **VIRTUAL AIRCRAFT OPERATIONS CHECKLIST**

(30) Priority: 25.01.2016 US 201615005342
(71) Applicant: GE Aviation Systems LLC, Grand Rapids, MI 49512 (US)
(72) Inventor: FIGARD, Michael Eric, Grand Rapids, MI Michigan 49512 (US); CARROLL, Alexander K., San Ramon, CA California 94583 (US); OVENS, Norman Leonard, Grand Rapids, MI Michigan 49512 (US); GREEN, Sharon Ann, Pinellas Park, FL Florida 33782 (US); COOPER, Jennifer, San Ramon, CA California 94583 (US); KIM, So Young, San Ramon, CA California 94583 (US); MURUGAPPAN, Sundar, San Ramon, CA California 94583 (US); SOLIZ, Boris A., San Ramon, CA California 94583 (US); THIBAULT, Kristian, Van Buren Township, MI Michigan 48111 (US)
(74) Representative: Williams, Andrew Richard

(57) **Abstract**

Systems and methods for controlling an operations specified by an operations checklist of an aircraft are provided. A method can include providing a user interface (120) for display on a display screen (110). The user interface (120) can include a checklist (122) having one or more checklist items (124) and can present an interactive virtual element (126) in conjunction with each checklist item (124). Each checklist item (124) and virtual element (126) can be associated with a task (128) to be performed for operation of an aircraft (100). The virtual elements (126) can be visual representations of physical control interfaces (116) associated with the task (128). The method can include receiving data indicative of a user interaction with at least one virtual element (126). In response, the method can further include sending one or more command signals to one or more aircraft control devices (430) to perform at least a portion of the task associated with the at least one virtual element (126).

## Description

### FIELD OF THE INVENTION

The present subject matter relates generally to controlling an aircraft operations checklist.

### BACKGROUND OF THE INVENTION

Before and during aircraft operations, flight crew members must perform several required procedures to check the status of the aircraft and its operating conditions. These procedures are often listed in an operations checklist. A checklist can be an electronic display of text dictating specific actions to be taken by the flight crew member. The checklist can be displayed, for example, on one or more display devices in the cockpit.

To perform the procedures listed on the operations checklist, a flight crew member will typically have to first read the electronic checklist display to determine the specific action required by the checklist. The flight crew member must then search elsewhere in the flight deck to find the physical system control that must be manipulated to accomplish the required procedure. However, such searching can increase crew workload and introduce greater potential for procedural error. Moreover, delays in completing the operations checklist can ultimately lead to flight delays.

### BRIEF DESCRIPTION OF THE INVENTION

Aspects and advantages of embodiments of the present disclosure will be set forth in part in the following description, or may be learned from the description, or may be learned through practice of the embodiments.

One example aspect of the present disclosure is directed to a computer-implemented method of controlling operations specified by an operations checklist of an aircraft. The method can include providing for display, by one or more computing devices, a user interface on a display screen. The user interface can include a checklist having one or more checklist items. The user interface can present an interactive virtual element in conjunction with each checklist item. Each checklist item and virtual element can be associated with a task to be performed for operation of an aircraft. The method can include receiving, by the one or more computing devices, data indicative of a user interaction with at least one virtual element. The method can further include, in response to the user interaction, sending, by the one or more computing devices, one or more command signals to one or more aircraft control devices to perform at least a portion of the task associated with the at least one virtual element, wherein the one or more aircraft control devices are remote from the display screen.

Another example aspect of the present disclosure is directed to a system for controlling operations specified by an operations checklist of an aircraft. The system can include a display device configured to display a user interface. The user interface can include a checklist having one or more checklist items. The user interface can present an interactive virtual element in conjunction with each checklist item. Each checklist item and virtual element can be associated with a task to be performed for operation of an aircraft. The system can include a control system configured to receive data indicative of a user interaction with at least one virtual element. The control system can be configured to, in response to the user interaction, send one or more command signals to one or more aircraft control devices to perform at least a portion of the task associated with the at least one virtual element. The one or more control devices can be remote from the display device.

Yet another example aspect of the present disclosure is directed an aircraft. The aircraft can include an engine, a fuselage, a display device, and a controller. The controller can include one or more processors and one or more memory devices located on an aircraft. The one or more memory devices can store instructions that when executed by the one or more processors cause the one or more processors to perform operations. The operations can include providing for display a user interface on the display device. The user interface can include a checklist having one or more checklist items. The user interface can present an interactive virtual element in conjunction with each checklist item. Each checklist item can be associated with a task to be performed for operation of an aircraft. The operations can include receiving data indicative of a user interaction with at least one virtual element. The operations can further include sending, in response to the user interaction, one or more command signals to one or more aircraft control devices to perform at least a portion of the task associated with the at least one virtual element. The one or more control devices can be remote from the display device.

Other example aspects of the present disclosure are directed to systems, methods, aircraft, avionics systems, devices, non-transitory computer-readable media for controlling an operations checklist of an aircraft.

Variations and modifications can be made to these example aspects of the present disclosure.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts a perspective view of an example portion of an aircraft according to example embodiments of the present disclosure;
FIG. 2 depicts an example user interface according to example embodiments of the present disclosure;
FIG. 3 depicts a flow diagram of an example method according to example embodiments of the present disclosure; and
FIG. 4 depicts an example system according to example embodiments of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Example aspects of the present disclosure are directed to systems and methods for completing an operations checklist. For instance, the systems and methods can provide a user interface on a touch screen display in a cockpit of an aircraft. The user interface can include one or more checklist items, and each of the checklist items can be associated with a task that is to be completed for operation of the aircraft. The user interface can also display an interactive virtual element (e.g., a soft button) for each task. A user (e.g., a flight crew member) can interact with the virtual element (e.g., via a touch interaction) to complete the associated task.

For example, the task can direct a user to set the pressurization of the aircraft. The user can provide a user interaction (e.g., a touch interaction) with the virtual element to set the pressurization. For instance, in the event that the physical control for setting the pressurization is a knob control, the associated virtual element can be a visual representation of the same or a similar knob control. The virtual knob control can be adjusted by the user interaction. The user interaction can be a circulating touch interaction at a location proximate the location the virtual knob element to simulate rotating of the knob control. The virtual knob element can rotate in a manner similar to that of the physical knob.

A control system can receive data indicative of the user interaction with a virtual element and can send one or more command signals to one or more aircraft control devices to perform a task. The one or more aircraft control devices can be configured to perform various aircraft operations and control various settings and parameters associated with the aircraft. For instance, in the event that the task directs a user to set the pressurization of the aircraft and the user provides a user interaction (e.g., to rotate a virtual knob element to set the pressurization), the control system can send one or more command signals to the one or more aircraft control devices one or more control devices that are configured to set and/or adjust aircraft pressure.

In response to receiving the one or more command signals, the aircraft control systems can execute a control action to complete the task. For instance, the control system can communicate with the one or more control devices to set the pressurization of the aircraft. In this way, the user need not search for and physically manipulate a physical control for setting pressurization. Upon completion of the task, the user can then attempt to perform the next checklist items by again interacting with the user interface.

In some implementations, subsequent checklist items and/or virtual elements can be locked such that a user must complete the operations checklist in a particular order. For instance, the user interface can include a first virtual element associated with a first task and a second virtual element associated with a second task. In one example, to properly complete the checklist, a user must perform the first task (e.g., turning on window heat) before performing the second task (e.g., turning on the exit lights). The control system and/or the display device can lock the second virtual element until after the first task is completed such that, for instance, user interaction cannot adjust the second virtual element. After completion of the first task, the second virtual element can be unlocked such that a user can interact with the second virtual element to complete the second task.

The systems and methods according to example aspects of the present disclosure can permit a flight crew member to perform an aircraft operations checklist in a more efficient manner. More particularly, the systems and methods can allow a flight crew member to complete an operations checklist through interaction only with a user interface. This can reduce inefficient searching throughout a cockpit for physical controls, as well as the potential for human error. The systems and methods can also increase flight crew members' familiarity with an operations checklist by employing virtual elements that visually represent the physical controls associated with a task. In this way, the systems and methods according to example aspects of the present disclosure has a technical effect of providing a computerized control platform that allows a user to complete tasks of an aircraft operation checklist through familiar actions.

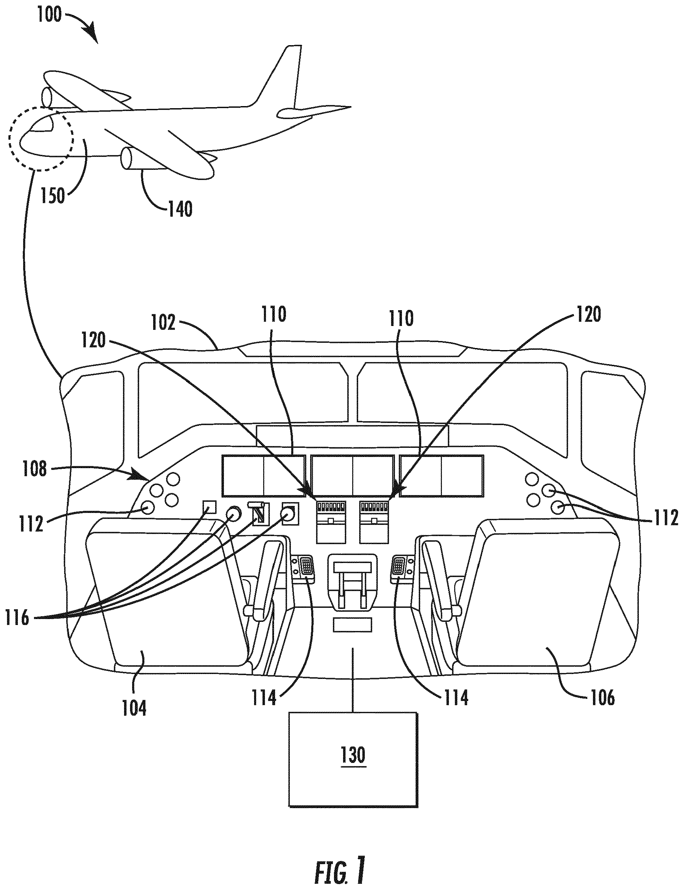

With reference now to the FIGS., example embodiments of the present disclosure will be discussed in further detail. FIG. 1 depicts a perspective view of an example portion of an aircraft 100 according to example embodiments of the present disclosure. The aircraft 100 can include, for instance, a cockpit 102, an engine 140, and a fuselage 150. A first user (e.g., a first flight crew member, a pilot) can be present in a seat 104 at the left side of the cockpit 102 and another user (e.g., a second flight crew member, a co-pilot) can be present at the right side of the cockpit 102 in a seat 106. The aircraft 100 can include a flight deck 108, which can include one or more multifunctional flight display devices 110 including one or more display screens. The aircraft can also include one or more instruments 112. In some implementations, the one or more instruments 112 can be located on the flight deck 108 in front of the one or more users and can provide information to aid in flying the aircraft 100.

Aircraft 100 can include one or more physical control interfaces 116. A physical control interface 116 can be, for example, a control interface that is configured to adjust a setting, parameter, mechanism, and/or condition of the aircraft 100. The physical control interfaces 116 can include, for instance, a button, momentary push button, compressible button, a switch mechanism, sliding control, level, knob, gauge, etc. For example, a physical control interface 116 can include a sliding manual control for setting and/or releasing a parking brake of aircraft 100. Under a typical operations checklist scenario, a user could manipulate the one or more physical control interfaces 116 to complete a checklist task. For instance, if a checklist item directed a user to release a parking brake, the user could physically manipulate the physical control interface 116 that is configured to release the parking brake.

The aircraft 100 can include one or more input devices 114 (e.g., in the cockpit 102) that can be used by one or more users to provide input to one or more processors and interact with the systems of the aircraft 100. The input devices 114 can include, for instance, any device suitable to accept input from a user and to convert that input to a graphical position on any of the multiple flight display screens 110. For instance, the one or more input devices 114 can include a joystick, multi-way rocker switches, mouse, trackball, keyboard, touch screen, touch pad, data entry keys, a microphone suitable for voice recognition, or any other suitable device. In some implementations, each user can have one or more separate input devices 114. Through use of the input devices 114, the one or more users can interact with the graphic and/or textual data elements provided for display on the screens of the display devices 110.

For instance, one or more user interfaces 120 can be displayed on the one or more display devices 110. For availability, one or more of the user interfaces 120 can be provided by a display device 110 on each side of the flight deck 108. In some implementations, one or more of the display devices 110 can be operably coupled with the input devices 114 such that a user can interact with the user interface 120 (e.g., cursor interaction via trackball, mouse, etc.) and the textual and/or graphical elements included in the user interface 120. Additionally, and/or alternatively, the display devices 110 can include a touch display screen that can allow a user to visualize the user interface 120 on the touch display screen and interact with the user interface 120 through the touch display screen.

According to example aspects of the present disclosure, the user interface 120 can include a checklist having one or more checklist items. The checklist can be an operations checklist of the aircraft 100. The one or more checklist items can be associated with one or more tasks. A task can include one or more procedures that are required or recommended to be performed for operation of the aircraft 100. The one or more tasks can include procedures that are to be performed before, during, and/or after the operation of the aircraft 100. For instance, a task can include turning on window heat, arming emergency exit lights, checking fire warning, checking voice recorder, setting pressurization, checking instruments 112, verifying fuel quantity, releasing a parking brake, turning on a beacon, adjusting engine anti-ice, setting flaps, locking the cockpit door, turning on pilot heat, checking a transponder, adjusting landing lights, etc.

The user interface 120 can also include one or more interactive virtual element. The one or more virtual elements can be associated with and presented in conjunction with each checklist item. Moreover, a virtual element can be associated with a task to be performed for operation of the aircraft 100. The one or more virtual elements can be, for instance, a soft button on the user interface 120. In some implementations, the virtual elements can be a visual representation of a physical control interface 116 associated with completion of the task. For example, in some implementations, the one or more virtual elements can be a non-textual, non-hyperlinked representation of a physical control interface 116. The one or more virtual elements can be a graphical representation of a physical control interface 116. By way of example, if the task (e.g., setting pressurization) includes rotating a knob, then the associated virtual element can be a visual representation of the same or a similar knob. The visual representation can also include visual state annunciation (e.g., labeling) similar to that of the physical control interface (e.g., momentary push button).

A user can interact with the virtual element through a user interaction. The user interaction can simulate an interaction with a corresponding physical control interface 116. In one example, the virtual element can be a visual representation of a momentary push button. The user interaction can be, for example, a pushing touch interaction on the display screen to simulate pushing of the push button interface. In another example, the virtual element can be a visual representation of a knob control interface. The user interaction can be, for example, a circulating touch interaction (or cursor interaction) on a display screen of display devices 110 to similar rotating of the manual knob control.

The one or more virtual elements of the user interface 120 can be adjusted by user interaction. For example, in response to a pushing touch interaction, at least a portion of the virtual element (e.g., illuminable labeling) can be adjusted in a manner similar to the manner in which the physical momentary push button would be adjusted in the event that it was physically manipulated. In another example, in response to a circulating touch interaction, the virtual element can be rotated in a similar manner in which the manual knob control would be adjusted under physical manipulation.

The one or more display devices 110 can be configured to be in wired and/or wireless communication with a control system 130. For instance, in some implementations, a display device 110 can communicate with the control system 130 via a network. The one or more display devices 110 can be configured to receive a user interaction with the user interface 120 and to provide data indicative of the user interaction to the control system 130. For instance, a user can provide a touch interaction with one or more virtual elements via a touch screen of the display devices 110. One or more of the display devices 110 can send data indicative of the user's touch interaction with the virtual element to the control system 130. The control system 130 can be configured to receive data indicative of the user's interaction with the virtual element.

In response, the control system 130 can be configured to send one or more signals (e.g., command signals) to one or more aircraft control devices (not shown) to complete the task associated with the virtual element. For instance, the control system 130 can be in wired or wireless communication with the one or more aircraft control devices. Additionally, and/or alternatively, the control system 130 can be configured to communicate with the aircraft control devices via a network.

The one or more aircraft control devices can be configured to adjust, set, and/or otherwise change a parameter, state, mechanism, and/or condition of an aircraft. For instance, the one or more control devices can be mechanical, electrical, and/or computerized systems associated with turning on window heat, arming emergency exit lights, checking fire warning, checking voice recorder, setting pressurization, checking instruments 112, verifying fuel quantity, releasing a parking brake, turning on a beacon, adjusting engine anti-ice, etc. Additionally, and/or alternatively, the aircraft control devices can be associated with the physical control interfaces 116. Thus, the one or more aircraft control devices 130 can be utilized to complete a task of the operations checklist.

The control system 130 can be configured to send one or more command signals to the one or more aircraft control devices to perform at least a portion of a task. For example, a task of the checklist can direct a user to set the pressurization of the aircraft 100. The user can interact (e.g., via a touch interaction) with the virtual element (e.g., a virtual knob element) associated with the task. In response to receiving data indicative of the user interaction with the virtual element, the control system 130 can be configured to send one or more command signals to the aircraft control device that is associated with setting pressurization.

In response to receiving the one or more command signals, the aircraft control devices can execute a control action to complete at least a portion of the task. For instance, in response to receiving one or more command signals to set pressurization, the one or more associated aircraft control device can set the pressurization of the aircraft 100.

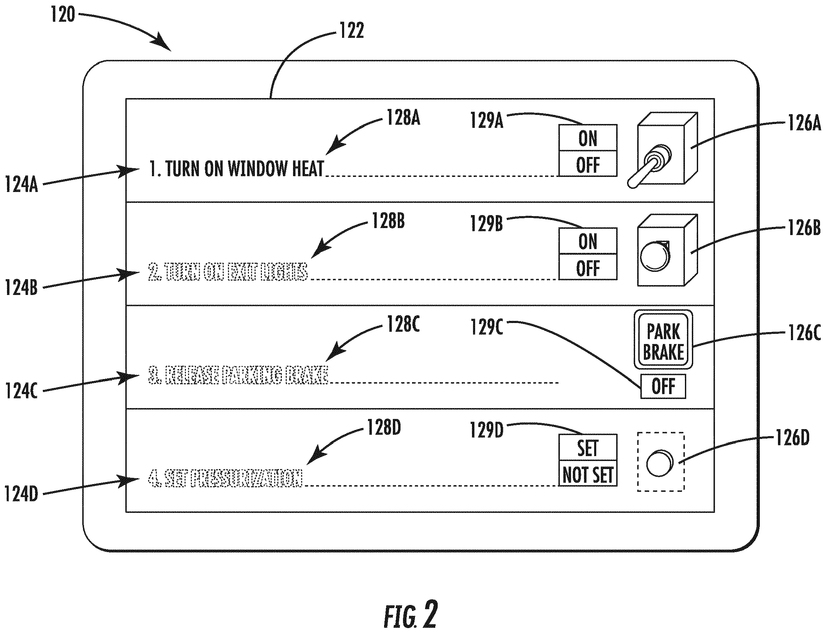

FIG. 2 depicts an example user interface 120 according to example embodiments of the present disclosure. The user interface 120 can include a checklist 122. The checklist 122 can include one or more checklist items 124A-D. The one or more checklist items 124A-D can be associated with one or more virtual elements 126A-D. Each of the one or more checklist items 124A-D and/or the one or more virtual elements 126A-D can be associated with a task 128A-D to be performed by a user for the operation of the aircraft 100. Four checklists items 124A-D are depicted in FIG. 2 for purposes of illustration and discussion. Those of ordinary skill in the art, using the disclosures provided herein, will understand that more or fewer checklist items can be used without deviations from the scope of the present disclosure.

As indicated above, the one or more virtual elements 126A-D can be visual representations of a physical control interface 116 associated with completion of the task. For example, the checklist item 124A and/or the virtual element 126A can be associated with the task of turning on the window heat of the aircraft 100. In the event that the physical control interface 116 associated with turning on the window heat is a switch mechanism, the virtual element 126A can be a visual representation of the same or a similar switch mechanism.

In another example, the checklist item 124B and/or the virtual element 126B can be associated with the task of turning on the exit lights of the aircraft 100. In the event that the physical control interface 116 associated with turning on the exit lights is a push button control interface, the virtual element 126B can be a visual representation of the push button control interface.

In yet another example, the checklist item 124C and/or the virtual element 126D can be associated with the task of releasing the parking brake of the aircraft 100. In the event that the physical control interface 116 associated with releasing the parking brake is a momentary push button interface, the virtual element 126C can be a visual representation of the momentary push button interface.

In another example, the checklist item 124D and/or the virtual element 126C can be associated with the task of setting the pressurization of the aircraft 100. In the event that the physical control interface 116 associated with setting the pressurization is a knob control interface, the virtual element 126D can be a visual representation of the knob control interface.

The user interface 120 can include one or more status indicators 129A-D. The one or more status indicators 129A-D can indicate whether or not the task has been completed. For instance, the status indicators can include a change in lighting associated with the virtual element. For example, for the task 128C requiring release of the parking brake, the status indicator 129C can indicate whether the parking brake of aircraft 100 is "OFF". Additionally, and/or alternatively, the virtual element 126C, its annunciated label (e.g., "PARK BRAKE"), and/or any other of its visual state annunciations can be illuminated, extinguished, brighten, dimmed etc.

Additionally, and/or alternatively, one or more of the checklist items 124A-D and/or the virtual elements 126A-D can be locked by the display device 110 and/or the control system 130. For instance, in one example implementation, to progress through and complete the checklist 122, a user must perform the task 128A associated with the checklist item 124A before the user can perform the tasks 128B-C associated with the checklist items 124B-D, respectively. Accordingly, the checklist items 124B-D and/or the virtual elements 126B-D can be locked such that the virtual elements 126B-D cannot be adjusted by user interaction. In some implementations, the user interface 120 can include a status indicator to indicate whether or not the checklist items 124A-D and/or the virtual elements 126A-D are available. For example, in the event that the checklist items 124B-D and/or the virtual elements 126B-D are locked (and thus unavailable) the checklist items 124B-D and/or the virtual elements 126B-D can be grayed-out. Other suitable status indicators can be used without deviations from the scope of the present disclosure.

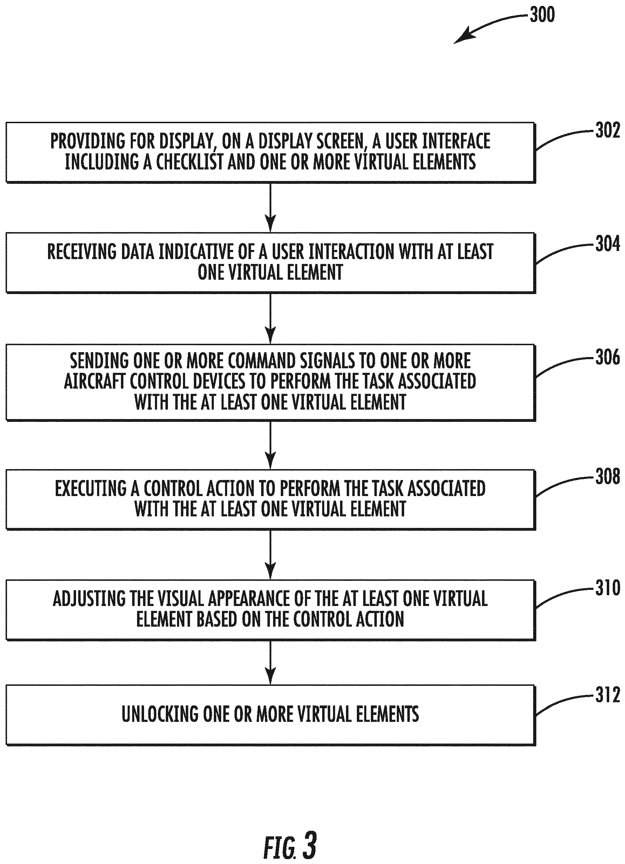

FIG. 3 depicts a flow diagram of an example method according to example embodiments of the present disclosure. FIG. 3 can be implemented by one or more computing devices, such as the control system 130 depicted in FIG. 1. In addition, FIG. 3 depicts steps performed in a particular order for purposes of illustration and discussion. Those of ordinary skill in the art, using the disclosures provided herein, will understand that the various steps of any of the methods disclosed herein can be modified, adapted, expanded, rearranged and/or omitted in various ways without deviating from the scope of the present disclosure.

At (302), the method 300 can include providing for display a user interface on a display screen, the user interface including a checklist and one or more virtual elements. For instance, a user interface 120 can be provided for display on a screen of the display devices 110. The user interface 120 can include a checklist 122 having one or more checklist items 124A-D. The user interface 120 can present an interactive virtual element 126A-D in conjunction with each checklist item 124A-D. Each of the checklist items 124A-D and/or virtual elements 126A-D can be associated with a task 128A-D to be performed for operation of the aircraft 100.

At (304), the method 300 can include receiving data indicative of a user interaction with at least one virtual element. For instance, the control system 130 can receive data indicative of a user interaction with at least one virtual element 126A-D. In some implementations, one or more of the display devices 110 can include a touch screen that allows a user to interact with at least one virtual element by one or more user interactions. The user interaction can be a touch interaction on the screen of the one more display devices 110 at a location proximate the location of the at least one virtual element 126A-D on the display screen. One or more of the display devices 110 can send data indicative of the user interaction to the control system 130 and the control system 130 can receive the data from the display devices 110. In other implementations, one or more of the display devices 110 can include a screen that is not a touch screen and the user interaction can be a cursor interaction (e.g., via a trackball).

For example, the checklist item 124C and/or the virtual element 126C can be associated with a task 128C directing a user to release the parking brake of aircraft 100. In the event that the physical control interface 116 associated with releasing the parking brake is a momentary push button, the virtual element 126C can be a visual representation of the same or a similar momentary push button interface. The user interaction can be a pushing touch interaction on the display screen to simulate pushing of the physical control interface (e.g., momentary push button interface). The control system 130 can receive data indicative of the pushing touch interaction.

In another example, the checklist item 124D and/or the virtual element 126D can be associated with a task 128D directing a user to set the pressurization of the aircraft 100. In the event that the physical control interface 116 associated with setting aircraft pressurization is a knob control interface, the virtual element 126D can be a visual representation of the knob control interface. The user interaction can be a circulating touch (or cursor) interaction (on the display screen) at a location proximate the location of the virtual element 126D to simulate rotating of the knob control interface. The control system 130 can receive data indicative of the circulating touch (or cursor) interaction.

At (306), the method 300 can include sending one or more command signal to one or more aircraft control devices to perform at least a portion of the task associated with the at least one virtual element. For instance, the control system 130 can, in response to the user interaction, send one or more command signals to one or more aircraft control devices that are remote from the screen of display device 110 to perform at least a portion of a task associated with a virtual element. For example, in response to receiving data indicative of a circulating touch interaction with the virtual element 126D, the control system 130 can send one or more command signals to the one or more aircraft control devices that are associated with setting aircraft pressurization. The one or more command signals can direct the one or more aircraft control devices to set the pressurization of the aircraft 100.

At (308), the method 300 can include executing a control action to perform the task associated with at least one virtual element. For instance, the one or more aircraft control devices that received the command signals can execute a control action to perform at least a portion of the task associated with at least one of the virtual elements 126A-D. By way of example, after receiving the one or more command signals to set the pressurization of the aircraft 100, the aircraft control devices can set the pressurization of aircraft 100.

At (310), the method 300 can include adjusting a visual appearance of at least one of the virtual elements 124A-D based on the control action. For instance, upon completion of the control action (e.g., setting pressurization) the one or more aircraft control devices can communicate with the control system 130 to indicate that the task has been completed. The control system 130 can communicate with the one or more display devices 110 indicating that the task has been completed. In response, the display devices 110 can adjust the virtual knob element 126D to a position that represents the visual appearance of a physical knob control interface when the pressurization is set.

Additionally, and/or alternatively, the aircraft control devices can adjust a physical control interface 116 in a manner as if the user had physically manipulated the physical control interface 116. For example, in the event that a user interacts with a virtual element 126C representing a momentary push button to set the parking brake, the aircraft control devices can illuminate the physical momentary push button interface associated with the parking brake to show that the parking brake is set.

At (312), the method 300 can further include unlocking one or more virtual elements. For instance, the user interface 120 can include a first checklist item 124A associated with a first virtual element 126A and a second checklist item 124B associated with a second virtual element 126B. In one example, to properly complete the checklist 122, a user must perform the task 128A (e.g., turning on window heat) associated with the first checklist item 124A before performing the task 128B (e.g., turning on the exit lights) associated with the second checklist item 124B. The control system 130 and/or the display device 110 can lock the second checklist item 214B and/or virtual element 126B until after the task 128A is completed. For instance, the second checklist item 214B, the virtual element 126B, and/or the task 128B can be locked such that user interaction cannot adjust the virtual element 126B and/or cause the task 128B to be completed. Thus, once the task 128A is completed, the control system 130 and/or the display device 110 can unlock the checklist item 124B, the virtual element 126B, and/or task 128B, such that it is available to a user for user interaction.

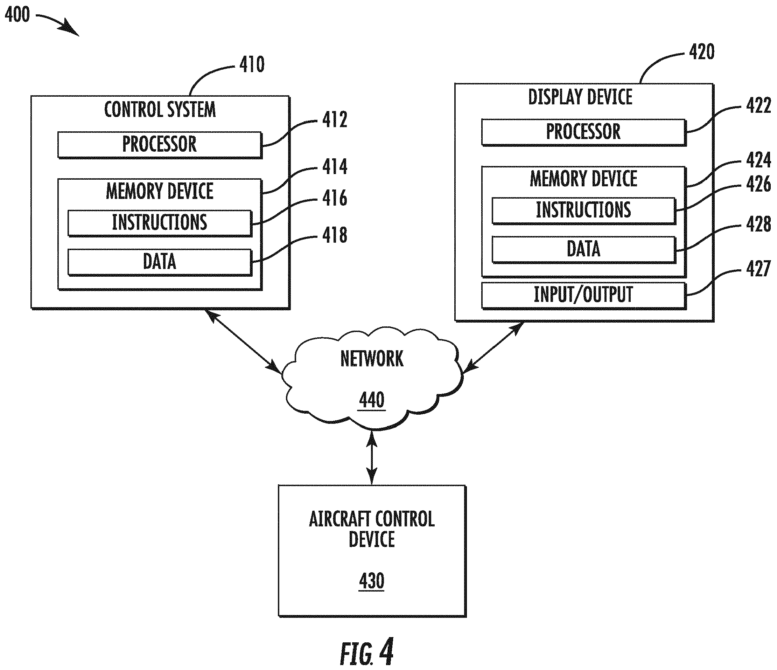

FIG. 4 depicts an example system 400 according to example embodiments of the present disclosure. As shown, the system 400 can include a control system 410 and one or more display devices 420. The control system 410 can correspond to the control system 130 as described in example embodiments of the present disclosure. The one or more display devices 420 can correspond to the one or more display devices 110 as described in example embodiments of the present disclosure.

The control system 410 can include one or more processors 412 and one or more memory devices 414. The control system 410 can also include a network interface used to communicate with the display device 420 and/or one or more aircraft control devices 430 over a network 440. The network interface can include any suitable components for interfacing with one more networks, including for example, transmitters, receivers, ports, controllers, antennas, or other suitable components. The network 440 can include a data bus or a combination of wired and/or wireless communication links. The network 440 can be any type of communications network, such as a local area network (e.g. intranet), wide area network (e.g. Internet), cellular network, or some combination thereof.

The one or more processors 412 can include any suitable processing device, such as a microprocessor, microcontroller, integrated circuit, logic device, or other suitable processing device. The one or more memory devices 414 can include one or more computer-readable media, including, but not limited to, non-transitory computer-readable media, RAM, ROM, hard drives, flash drives, or other memory devices. The one or more memory devices 414 can store information accessible by the one or more processors 412, including computer-readable instructions 416 that can be executed by the one or more processors 412. The instructions 416 can be any set of instructions that when executed by the one or more processors 412, cause the one or more processors 412 to perform operations.

As shown in FIG. 4, the one or more memory devices 414 can also store data 418 that can be retrieved, manipulated, created, or stored by the one or more processors 412. The data 418 can include, for instance, data associated with virtual elements, checklist items, tasks, control actions, and/or the aircraft control devices associated therewith. The data 418 can be stored in one or more databases. The one or more databases can be connected to the control system 410 by a high bandwidth LAN or WAN, or can also be connected to the control system 410 through network 440. The one or more databases can be split up so that they are located in multiple locales.

The display device 420 can include one or more processors 422 and one or more memory devices 424. The display device 420 can also include a network interface used to communicate with the control system 410 and/or one or more aircraft control devices 410 over a network 440. The network interface can include any suitable components for interfacing with one more networks, including for example, transmitters, receivers, ports, controllers, antennas, or other suitable components.

The one or more processors 422 can include any suitable processing device, such as a microprocessor, microcontroller, integrated circuit, logic device, or other suitable processing device. The one or more memory devices 424 can include one or more computer-readable media, including, but not limited to, non-transitory computer-readable media, RAM, ROM, hard drives, flash drives, or other memory devices. The one or more memory devices 424 can store information accessible by the one or more processors 422, including computer-readable instructions 426 that can be executed by the one or more processors 422. The instructions 426 can be any set of instructions that when executed by the one or more processors 422, cause the one or more processors 422 to perform operations. The instructions 426 can be executed by the one or more processors 422 to display, for instance, a user interface on an input/output device 427. The instructions 426 and/or other programs executed by the one or more processers 422 can allow a user to perform functions on a screen surface such as providing user interactions (e.g., touch, cursor) with virtual elements and inputting commands and other data through the screen surface.

The one or more memory devices 424 can also store data 428 that can be retrieved, manipulated, created, or stored by the one or more processors 422. The data 148 can include, for instance, data associated with a user interface, operations checklist, checklist items, tasks, virtual elements, and/or other information associated therewith. The data 428 can be stored in one or more databases. The one or more databases can be connected to the display device 420 by a high bandwidth LAN or WAN, or can also be connected to the display device 420 through the network 440. The one or more databases can be split up so that they are located in multiple locales.

The display device 420 can include an input/output device 427. The input/output device 427 can include a touch screen surface. Such touch screen surface can include any suitable form including that of a liquid crystal display (LCD) and can use various physical or electrical attributes to sense inputs and interactions from a user. The input/output device 427 can also include a trackball, mouse, other cursor device, touch pad, data entry keys, a microphone suitable for voice recognition, and/or other suitable input devices. The input/output 427 can also include other suitable output devices, such as other audio or visual outputs suitable for indicating the elements of a user interface (e.g., tasks associated with checklist items).

The technology discussed herein makes reference to computer-based systems, as well as, actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to describe the present disclosure, including the best mode, and also to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A computer-implemented method of controlling operations specified by an operations checklist of an aircraft, comprising:
   providing for display, by one or more computing devices, a user interface on a display screen, the user interface comprising a checklist having one or more checklist items, the user interface presenting an interactive virtual element in conjunction with each checklist item, each checklist item and virtual element associated with a task to be performed for operation of an aircraft;
   receiving, by the one or more computing devices, data indicative of a user interaction with at least one virtual element;
   in response to the user interaction, sending, by the one or more computing devices, one or more command signals to one or more aircraft control devices to perform at least a portion of the task associated with the at least one virtual element, wherein the one or more aircraft control devices are remote from the display screen.
2. The computer-implemented method of clause 1, wherein upon receiving the one or more command signals, the one or more aircraft control devices execute a control action to perform at least a portion of the task associated with the at least one virtual element.
3. The computer-implemented method of clause 1 or 2, further comprising:
   adjusting, by the one or more computing devices, a visual appearance of the at least one virtual element based on the control action.
4. The computer-implemented method of any preceding clause, wherein the virtual element is a visual representation of a physical control interface associated with completion of the task.
5. The computer-implemented method of any preceding clause, wherein the user interaction is a touch interaction or cursor interaction on the display screen at a location proximate the location of the at least one virtual element on the display screen.
6. The computer-implemented method of any preceding clause, wherein the virtual element is a visual representation of a knob control interface, and wherein the user interaction is a circulating touch interaction on the display screen at a location proximate the location of the at least one virtual element on the display screen to simulate rotating of the knob control interface.
7. The computer-implemented method of any preceding clause, wherein the virtual element is a visual representation of a push button interface, and wherein the user interaction is a pushing touch interaction on the display screen to simulate pushing of the push button interface.
8. The computer-implemented method of any preceding clause, wherein the user interface further comprises a status indicator to indicate whether or not the task has been completed.
9. The computer-implemented method of any preceding clause, wherein the user interface includes a first checklist item associated with a first virtual element and a second checklist item associated with a second virtual element, and wherein a task associated with the first checklist item must be performed before a task associated with the second checklist item.
10. The computer-implemented method of any preceding clause, the method further comprising:
   locking, by the one or more computing devices, the second virtual element such that the second virtual element is not adjustable by user interaction until after the task associated with the first checklist item is completed.
11. The computer-implemented method of any preceding clause, wherein the user interface further comprises a status indicator to indicate whether or not the second virtual element is accessible.
12. A system for controlling an operations specified by an operations checklist of an aircraft, comprising:
   a display device configured to display a user interface, the user interface comprising a checklist having one or more checklist items, the user interface presenting an interactive virtual element in conjunction with each checklist item, each checklist item and virtual element associated with a task to be performed for operation of an aircraft; and
   a control system configured to receive data indicative of a user interaction with at least one virtual element and, in response to the user interaction, to send one or more command signals to one or more aircraft control devices to perform at least a portion of the task associated with the at least one virtual element, wherein the one or more control devices are remote from the display device.
13. The system of clause 12, wherein, upon receiving the one or more command signals, the one or more aircraft control devices are configured to execute a control action to perform at least a portion of the task associated with the at least one virtual element.
14. The system of clause 12 or 13, wherein the control system is further configured to adjust a visual appearance of the at least one virtual element based on the control action.
15. The system of any of clauses 12 to 14, wherein the virtual element is a visual representation of a physical control interface associated with completion of the task.
16. The system of any of clauses 12 to 15, wherein the user interaction is a touch interaction on the display screen at a location proximate the location of the at least one virtual element on the display screen.
17. The system of any of clauses 12 to 16, wherein the user interface includes a first checklist item associated with a first virtual element and a second checklist item associated with a second virtual element, and wherein a task associated with the first checklist item must be performed before a task associated with the second checklist item.
18. An aircraft, comprising:
   an engine;
   a fuselage;
   a display device; and
   a controller comprising one or more processors and one or more memory devices located on an aircraft, the one or more memory devices storing instructions that when executed by the one or more processors cause the one or more processors to perform operations comprising
   providing for display a user interface on the display device, the user interface comprising a checklist having one or more checklist items, the user interface presenting an interactive virtual element in conjunction with each checklist item, each checklist item associated with a task to be performed for operation of an aircraft;
   receiving data indicative of a user interaction with at least one virtual element; and
   sending, in response to the user interaction, one or more command signals to one or more aircraft control devices to perform at least a portion of the task associated with the at least one virtual element, wherein the one or more control devices are remote from the display device.
19. The aircraft of clause 18, wherein upon receiving the one or more command signals, the one or more aircraft control devices execute a control action to perform at least a portion of the task associated with at least one virtual element.
20. The aircraft of clause 18 or 19, wherein the user interface includes a first checklist item associated with a first virtual element and a second checklist item associated with a second virtual element, and wherein a task associated with the first checklist item must be performed before a task associated with the second checklist item.

## Claims

1. A computer-implemented method of controlling operations specified by an operations checklist of an aircraft, comprising:
providing for display, by one or more computing devices, a user interface (120) on a display screen (110), the user interface (120) comprising a checklist (122) having one or more checklist items (124), the user interface (122) presenting an interactive virtual element (126) in conjunction with each checklist item (124), each checklist item (124) and virtual element (126) associated with a task (128) to be performed for operation of an aircraft (100);
receiving, by the one or more computing devices, data indicative of a user interaction with at least one virtual element (126);
in response to the user interaction, sending, by the one or more computing devices, one or more command signals to one or more aircraft control devices (430) to perform at least a portion of the task (128) associated with the at least one virtual element (126), wherein the one or more aircraft control devices (430) are remote from the display screen (110).

2. The computer-implemented method of claim 1, wherein upon receiving the one or more command signals, the one or more aircraft control devices (430) execute a control action to perform at least a portion of the task (128) associated with the at least one virtual element (126).

3. The computer-implemented method of claim 1 or claim 2, further comprising:
adjusting, by the one or more computing devices, a visual appearance of the at least one virtual element (126) based on the control action.

4. The computer-implemented method of any preceding claim, wherein the virtual element (126) is a visual representation of a physical control interface (116) associated with completion of the task (128).

5. The computer-implemented method of any preceding claim, wherein the user interaction is a touch interaction or cursor interaction on the display screen (110) at a location proximate the location of the at least one virtual element (126) on the display screen (110).

6. The computer-implemented method of any preceding claim, wherein the virtual element (126D) is a visual representation of a knob control interface, and wherein the user interaction is a circulating touch interaction on the display screen (110) at a location proximate the location of the at least one virtual element (126D) on the display screen (110) to simulate rotating of the knob control interface.

7. The computer-implemented method of any preceding claim, wherein the virtual element (126B) is a visual representation of a push button interface, and wherein the user interaction is a pushing touch interaction on the display screen (110) to simulate pushing of the push button interface.

8. The computer-implemented method of any preceding claim, wherein the user interface (120) further comprises a status indicator (129) to indicate whether or not the task (128) has been completed.

9. The computer-implemented method of any preceding claim, wherein the user interface (120) includes a first checklist item (124A) associated with a first virtual element (126A) and a second checklist item (124B) associated with a second virtual element (126B), and wherein a task (128A) associated with the first checklist item (124A) must be performed before a task (128B) associated with the second checklist item (124B).

10. The computer-implemented method of claim 9, the method further comprising:
locking, by the one or more computing devices, the second virtual element (126B) such that the second virtual element (126B) is not adjustable by user interaction until after the task (128A) associated with the first checklist item (124A) is completed.

11. The computer-implemented method of claim 9 or claim 10, wherein the user interface (120) further comprises a status indicator to indicate whether or not the second virtual element is accessible.

12. A system for controlling an operations specified by an operations checklist of an aircraft, comprising:
a display device (110) configured to display a user interface (120), the user interface (120) comprising a checklist (122) having one or more checklist items (124), the user interface presenting an interactive virtual element (126) in conjunction with each checklist item (124), each checklist item (124) and virtual element (126) associated with a task (128) to be performed for operation of an aircraft (100); and
a control system (130) configured to receive data indicative of a user interaction with at least one virtual element (126) and, in response to the user interaction, to send one or more command signals to one or more aircraft control devices (430) to perform at least a portion of the task (128) associated with the at least one virtual element (126), wherein the one or more control devices (430) are remote from the display device (110).

13. The system of claim 12, wherein, upon receiving the one or more command signals, the one or more aircraft control devices (430) are configured to execute a control action to perform at least a portion of the task (128) associated with the at least one virtual element (126).

14. The system of claim 12 or claim 13, wherein the virtual element (126) is a visual representation of a physical control interface (116) associated with completion of the task (128).

15. An aircraft, comprising:
an engine (140);
a fuselage (150);
a display device (110); and
a controller (130) comprising one or more processors (412) and one or more memory devices (414) located on an aircraft (100), the one or more memory devices (414) storing instructions (416) that when executed by the one or more processors (412) cause the one or more processors (412) to perform operations comprising
providing for display a user interface (120) on the display device (110), the user interface (120) comprising a checklist (122) having one or more checklist items (124), the user interface (120) presenting an interactive virtual element (126) in conjunction with each checklist item (124), each checklist item (124) associated with a task (128) to be performed for operation of an aircraft (100);
receiving data indicative of a user interaction with at least one virtual element (126); and
sending, in response to the user interaction, one or more command signals to one or more aircraft control devices (430) to perform at least a portion of the task (128) associated with the at least one virtual element (126), wherein the one or more control devices (430) are remote from the display device (110).
